# DEMANDE DE BREVET EUROPEEN

(11) **EP 4 575 853 A1**
(43) Date de publication de la demande: **25.06.2025**
(21) Numéro de dépôt: 24222490.5
(22) Date de dépôt: 20.12.2024
(51) Int. Cl.: G06F 21/52, G06F 21/57, G06F 21/64, H04L 9/32

(54) **MÉTHODE DE CONTRÔLE D EXÉCUTION D'UN PROGRAMME D ORDINATEUR**

(30) Priorité: 22.12.2023 FR 2315151
(71) Demandeur: Commissariat à l'Energie Atomique et aux Energies Alternatives, 75015 Paris (FR)
(72) Inventeur: JOUSSE, Adrien, 91191 Gif-sur-Yvette Cedex (FR)
(74) Mandataire: Brevalex

(57) **Abrégé**

Méthode de contrôle d'exécution d'un programme exécuté par un premier ordinateur, dit prouveur, au moyen d'un deuxième ordinateur, dit vérificateur, dans laquelle :
S30) pour chaque fonction tracée (F_i) exécutée lors de l'exécution du programme, parmi un ensemble de fonctions tracées, le prouveur détecte l'exécution de la fonction tracée (F_i) et enregistre un identifiant (ld_i) de la fonction tracée ;
S40) le prouveur transmet au vérificateur les identifiants (ld_i) des fonctions tracées qui ont été exécutées, dans le même ordre que l'ordre d'exécution des fonctions tracées correspondantes ;
S50) le vérificateur évalue si la séquence de fonctions tracées associée à des identifiants de fonction tracée qu'il a reçus constitue une séquence possible de fonctions tracées ; et
S90) le vérificateur déclenche une action en fonction au moins d'un résultat de l'évaluation réalisée à l'étape S50.

## Description

### DOMAINE TECHNIQUE DE L'INVENTION

L'invention concerne une méthode de contrôle d'exécution d'un programme d'ordinateur, notamment par attestation à distance.

### ÉTAT DE LA TECHNIQUE

Dans le domaine de la cybersécurité, différentes méthodes ont été développées ont été développées pour suivre le fonctionnement d'ordinateurs et vérifier que le fonctionnement de ceux-ci reste normal et que l'intégrité de ces ordinateurs n'est pas compromise.

La technologie eBPF (extended Berkeley Packet Filter) (eBPF est une marque déposée) a ainsi été développée afin de réaliser des fonctions de filtrage de paquets réseau, de monitoring système, de profilage des performances, de sécurité, etc. Cette technologie permet de suivre une large gamme d'événements sur des ordinateurs mis sous surveillance, de vérifier le flux de contrôle d'instructions exécutées sur ces ordinateurs (attestation du flux de contrôle). Elle permet ainsi de s'assurer que le fonctionnement des ordinateurs placés sous surveillance reste normal. Le suivi est réalisé grâce à l'exécution de programmes personnalisés et sécurisés au sein du noyau des ordinateurs suivis, en environnement Linux.

Indépendamment, pour permettre une analyse fine du fonctionnement de certains ordinateurs, une autre technologie, la technologie Intel PT (Intel PT est une marque déposée), a été développée. Cette technologie permet de tracer de manière précise et efficace l'exécution de certaines opérations par le processeur de l'ordinateur, par l'enregistrement d'informations sur le flux de contrôle du processeur, comme les branchements, les sauts et les appels de fonction.

Pour permettre de suivre de manière détaillée le fonctionnement d'un ordinateur, il a notamment été proposé, comme le montre le document Ref.1 ci-dessous, de combiner ces deux méthodes.
Ref.1 : D. Papamartzivanos, S. A. Menesidou, P. Gouvas and T. Giannetsos, "Towards Efficient Control-Flow Attestation with Software-Assisted Multi-level Execution Tracing," 2021 IEEE International Mediterranean Conférence on Communications and Networking (MeditCom), Athens, Greece, 2021, pp. 512-518, doi: 10.1109/MeditCom49071.2021.9647635.

Dans ce document, les deux méthodes évoquées précédemment sont combinées de manière à permettre un suivi fin du fonctionnement de l'ordinateur mis sous surveillance.

Cette approche permet notamment de vérifier que des instructions transmises à une ressource particulière mise sous surveillance, comme un module TPM, sont exécutées de manière normale (un module TPM désigne un module de plateforme de confiance, ou « Trusted Platform Module » en Anglais).

Le suivi de fonctionnement est fait de la manière suivante. Tout d'abord, les instructions transmises à la ressource particulière mise sous surveillance sont interceptées. En cas d'anomalie, une surveillance de plus bas niveau est déclenchée et assure le suivi des instructions exécutées par le processeur, en utilisant la technologie IntelPT. Ce suivi détermine les différentes adresses mémoires utilisées ce qui permet de vérifier la normalité du processus en cours.

L'inconvénient de cette approche est sa complexité, qui nécessite le recours à deux technologies différentes, et en particulier repose sur une analyse de très bas niveau du fonctionnement du processeur pour la caractérisation d'une situation anormale qui est détectée.

Les méthodes de contrôle d'exécution de programmes par attestation à distance (de l'Anglais 'Remote Attestation', ou `RA') comme celle brièvement mentionnée par le document Ref.1 ont connu divers développements pour permettre aux universités et à l'industrie d'améliorer la sécurité de leurs systèmes informatiques.

Cependant, les produits commerciaux disponibles ne permettent généralement que la validation de propriétés statiques, telles que l'empreinte des applications, et ne gèrent pas les propriétés d'exécution, telles que la correction du flux d'exécution des programmes.

Cette limitation a poussé les chercheurs à identifier de nouvelles approches, parmi lesquelles l'attestation distante d'exécution, en Anglais 'Runtime RA'. Ces approches, auxquelles il est fait brièvement référence dans le document Ref.1, sont illustrées notamment par le document Ref.2 suivant.
Ref.2 : Toffalini, F., Losiouk, E., Biondo, A., Zhou, J., & Conti, M. (2018). « ScaRR: Scalable Runtime Remote Attestation for Complex Systems. » International Symposium on Recent Advances in Intrusion Détection.

L'attestation distante est une procédure qui permet de vérifier l'état d'un premier ordinateur (le prouveur), à distance, à l'aide d'un deuxième ordinateur, le vérificateur. Le terme 'ordinateur' doit être compris ici de manière très large, et désigne en fait tout dispositif électronique en mesure d'exécuter un programme informatique. Il peut être un ordinateur individuel, un téléphone portable, une machine disposant de moyens de calcul (par exemple faisant partie de l'internet des objets), etc.

Pour effectuer cette vérification, le vérificateur envoie d'abord un challenge au prouveur, qui répond par un rapport. Le vérificateur analyse ensuite ce rapport pour déterminer si le prouveur a été compromis. Dans les méthodes connues d'attestation distante, généralement statiques, la vérification du prouveur permet de conclure à l'intégrité de propriétés matérielles et logicielles spécifiques (par exemple, le prouveur a effectivement chargé le logiciel prévu).

Cependant, ces méthodes n'offrent pas de défense contre les attaques survenant au cours de l'exécution d'un programme. Parmi ces dernières attaques, on distingue notamment les attaques de type « flux d'exécution" (de l'Anglais « control-flow ») qui visent à modifier le comportement du programme pendant même son exécution. Pour détecter ces dernières attaques visant à modifier le flux d'exécution d'un programme exécuté par le prouveur, les chercheurs ont proposé des méthodes d'attestation distante de flux d'exécution.

La méthode ScaRR proposée par le document Ref.2 propose une telle méthode.

Cette approche avantageusement permet, à l'aide d'un vérificateur distant, de détecter les modifications du flux d'exécution d'un programme exécuté par un prouveur.

Cependant, cette approche requiert un compilateur spécifique afin de modifier le code source du programme. Elle conduit à ajouter des appels à des fonctions spécifiques du noyau permettant à l'application de signaler au prouveur certains évènements. Ces appels occasionnent un temps d'exécution supplémentaire, dû aux commutations fréquentes entre l'espace noyau et l'espace utilisateur. Le noyau utilisé doit être modifié afin de proposer ces fonctions spécifiques ce qui n'est pas toujours possible sur des systèmes critiques.

Enfin, lorsqu'une demande d'attestation est envoyée, le prouveur démarre l'exécution du programme à attester. Selon la nature du programme, cette approche n'est pas toujours envisageable (on peut penser par exemple au cas où le programme sert à piloter le lancement d'un missile). Enfin, l'envoi de plusieurs rapports intermédiaires de vérification, bien que nécessaire dans le cadre de programme complexes, introduit une dépendance importante à une connexion réseau stable. Ce dernier point ne peut être garantit dans des systèmes mobiles, pouvant être déconnectés au moment où la demande d'attestation est reçue.

### EXPOSÉ DE L'INVENTION

La présente invention vise à remédier à tout ou partie des inconvénients de l'état de la technique cités ci-dessus.

À cet effet, selon la présente divulgation il est proposé une méthode de contrôle d'exécution d'un programme exécuté par un premier ordinateur, dit prouveur, au moyen d'un deuxième ordinateur, dit vérificateur ; le programme étant enregistré en espace utilisateur du prouveur ; une fonction tracée étant une fonction exécutable par le prouveur parmi un ensemble prédéterminé de fonctions du prouveur, et impliquant une communication d'informations entre l'espace utilisateur et l'espace noyau ; un faisceau de référence étant une structure de données à disposition du vérificateur à partir de laquelle il est possible de déterminer si une séquence de fonctions tracées est une séquence possible de fonction tracées, c'est-à-dire une séquence de fonctions tracées susceptibles d'être exécutées, notamment de manière consécutive, lors d'une exécution conforme du programme ; dans laquelle les opérations suivantes sont réalisées :
S30) lors d'une exécution du programme, en exécutant une application d'enregistrement enregistrée en espace noyau, pour chaque fonction tracée exécutée lors de l'exécution du programme, le prouveur détecte l'exécution de la fonction tracée et enregistre un identifiant de la fonction tracée ;
S40) le prouveur transmet au vérificateur les identifiants des fonctions tracées qui ont été exécutées, dans le même ordre que l'ordre d'exécution des fonctions tracées correspondantes ;
S50) à l'aide du faisceau de référence, le vérificateur évalue si une séquence de fonctions tracées associée à des identifiants de fonction tracée qu'il a reçus, dite séquence reçue, constitue une séquence possible de fonctions tracées ; et
S90) le vérificateur déclenche une action en fonction au moins d'un résultat de l'évaluation réalisée à l'étape S50.

Un identifiant de fonction tracée désigne ici toute donnée qui permet d'identifier une fonction tracée. Une exécution conforme du programme désigne une exécution du programme qui est conforme au déroulement prévu ou attendu du programme.

De préférence, à l'étape S50, l'évaluation faite par le vérificateur est faite sur la base d'une séquence de fonctions tracées, dite séquence reçue, constituée uniquement de fonctions tracées.

Avantageusement, la méthode de contrôle d'exécution définie ci-dessus permet d'assurer que l'ordre (ou la séquence) suivant laquelle les fonctions tracées sont exécutées par le programme (et donc, les éléments sont enregistrés) correspond bien à ce qui est attendu du programme et cela, sans imposer la moindre modification du programme exécuté.

Cette méthode permet donc de garantir, dans une grande mesure, que le flux d'exécution du programme est bien conforme à ce qui est attendu. En outre, elle permet de se prémunir des attaques par réutilisation de code (de l'Anglais 'Return Oriented Programming', ou ROP) qui modifient l'exécution du programme sans modifier le code source de ce dernier. En effet, si l'exécution du programme est modifiée, son flux d'exécution (ou trace d'exécution) sera différent. Ainsi, il y aura une divergence entre l'exécution observée et l'exécution prévue.

De plus, bien que la méthode conduise à enregistrer la trace d'exécution du programme, elle ne nécessite pas de modifier le code source du programme à observer.

Dans certains modes de mise en oeuvre, l'étape de transmission S40 comprend la transmission d'un identifiant de fonction tracée chaque fois que l'exécution d'une fonction tracée a été détectée à l'étape S30, et l'étape S50 d'évaluation est effectuée chaque fois qu'un identifiant de fonction tracée est reçu par le vérificateur (hormis éventuellement lors du ou des premières détections de fonctions tracées naturellement, au cas où le faible nombre de fonctions tracées détectées ne permet pas utilement de réaliser l'étape d'évaluation). Ainsi chaque fois qu'un identifiant de fonction tracée est reçu par le vérificateur, à l'étape S50 celui-ci évalue si une séquence reçue de fonctions tracées correspond à au moins une séquence possible de fonctions tracées. Si cette vérification conduit le vérificateur à conclure que la séquence reçue ne correspond à aucune séquence possible, il passe directement l'étape S90.

Si à l'étape S90, le vérificateur conclut que la séquence reçue de fonctions tracées ne correspond à aucune séquence possible (c'est-à-dire une séquence de fonctions tracées qui correspond à une exécution conforme du programme), le vérificateur déclenche une action en fonction de cette conclusion : en général, il interrompt l'exécution du programme, et/ou envoie un message d'alerte, et plus généralement toute action appropriée suite à la détection du fait que le flux d'exécution du programme n'a pas été conforme à l'exécution attendue.

Le nombre de fonctions tracées incluses dans la séquence reçue vérifiée à l'étape S50 peut varier. La séquence reçue vérifiée à l'étape S50 comporte au plus (et de préférence) la totalité des fonctions tracées exécutées depuis le lancement du programme.

Par ailleurs, bien que de préférence la transmission des identifiants (étape S40) et l'évaluation (étape S50) soient effectuées peu après chaque détection de l'exécution d'une fonction tracée, ces étapes peuvent être réalisées à une fréquence moindre, par exemple à intervalles réguliers, voire une seule fois, une fois que l'exécution du programme est terminée.

Avantageusement, la méthode suivant la présente divulgation peut être mise en oeuvre avec un noyau standard. De plus, cette méthode ne nécessite pas l'utilisation d'un processeur spécifique pour la mise en oeuvre de l'invention.

Dans certains modes de mise en oeuvre, l'ensemble prédéterminé de fonctions du prouveur comprend ou est constitué de fonctions choisies parmi des fonctions d'appel système, des opérations de lecture/écriture dans une mémoire du prouveur, et des fonctions d'exécution d'un code enregistré dans une zone prédéterminée d'une mémoire du prouveur.

Les fonctions tracées peuvent ainsi être des fonctions d'appel système, avec/sans valeurs de paramètres, des fonctions d'interaction avec un réseau de communication auquel le prouveur est connecté, des opérations d'écriture ou de lecture dans la mémoire (éventuellement dans une partie spécifique de la mémoire), l'exécution d'un code enregistré à une adresse spécifique, etc.

Les valeurs de paramètres mentionnées ci-dessus sont des données d'entrée pour l'exécution des fonctions tracées.

Par exemple, dans le faisceau de référence, un identifiant peut être l'identifiant d'un appel système et inclure au moins une valeur d'un paramètre de l'appel système considéré. Plus précisément, par exemple, l'appel système peut être une fonction d'écriture. Dans ce cas, il faut indiquer en entrée à la fonction tracée, qui est donc la fonction d'écriture, dans quel fichier le résultat doit être écrit : Il faut donc fournir à la fonction en entrée, comme valeur de paramètre, le nom du répertoire dans lequel le résultat doit être écrit.

Différentes structures peuvent être adoptées pour le faisceau de référence.

Le faisceau de référence peut ainsi être simplement une liste de séquences possibles d'exécution des fonctions tracées.

Cependant, dans d'autres modes de mise en oeuvre le faisceau de référence a une structure de graphe, dans lequel chaque noeud est associé à une fonction tracée.

Dans ce cas, à l'étape S50, le vérificateur peut par exemple évaluer si la séquence reçue constitue une séquence possible de fonctions tracées en vérifiant que ladite séquence reçue correspond à un chemin possible de parcours du faisceau de référence.

D'autre part, pour augmenter la fiabilité de la méthode de contrôle d'exécution, il est possible de prendre en compte les paramètres d'entrée des fonctions tracées.

Ainsi dans certains modes de mise en oeuvre, pour au moins une fonction tracée dite fonction tracée paramétrée, l'identifiant de la fonction tracée paramétrée inclut en outre une valeur d'au moins un paramètre d'entrée de ladite fonction tracée paramétrée.

On peut alors prévoir, lors de l'étape d'évaluation S50, lorsque le vérificateur évalue si la séquence reçue constitue une séquence possible de fonctions tracées, si au moins un identifiant reçu à l'étape S40 est l'identifiant d'une fonction tracée paramétrée, que le vérificateur détermine si la valeur dudit au moins un paramètre d'entrée incluse dans l'identifiant enregistré à l'étape S30 pour l'exécution considérée de la fonction tracée paramétrée correspond à la valeur dudit au moins un paramètre d'entrée pour l'exécution correspondante de la fonction tracée paramétrée dans la séquence possible de fonctions tracées.

Dans certains modes de mise en oeuvre, la méthode est sécurisée grâce à l'enregistrement des identifiants dans un module TPM.

Le module TPM fournit différentes fonctionnalités de sécurité, notamment un stockage sécurisé d'information (comme des clés de chiffrement, etc.).

Dans certains modes de mise en oeuvre, le module TPM peut appliquer une fonction de preuve à des séquences d'identifiants enregistrés à l'étape S30 créer ainsi des preuves d'exécution de séquences de fonctions tracées, qui serviront à vérifier que ces séquences ont effectivement été exécutées.

Ainsi dans certains modes de mise en oeuvre, le prouveur comporte un module de plateforme de confiance, ou module TPM ; lors de l'étape S30, les identifiants de fonctions tracées sont enregistrés par le prouveur dans le module TPM ;

la méthode comporte en outre les étapes S60, S70 et S80 suivantes :
S60) le module TPM, à partir d'une séquence d'identifiants enregistrés à l'étape S30, dite séquence enregistrée, calcule une preuve de séquence, dite preuve de séquence enregistrée (Pr_{enreg}), de ladite séquence enregistrée ; une preuve de séquence étant une donnée obtenue par une fonction de calcul de preuve à partir d'une séquence d'identifiants, la fonction de calcul de preuve étant telle que des séquences d'identifiants différentes ont des preuves différentes ;
S70) le TPM transmet la preuve de séquence enregistrée au vérificateur ;
S80) le vérificateur calcule une preuve de séquence reçue à l'aide de la fonction de calcul de preuve, à partir de la séquence reçue, et vérifie si la preuve de séquence reçue est égale ou non à la preuve de séquence enregistrée.

Dans certains modes de mise en oeuvre, à l'étape S60, la preuve est calculée en appliquant une fonction de hashage à un nom ou à une chaîne de caractères associé(e) à une fonction tracée.

Dans certains modes de mise en oeuvre, à l'étape S60, la preuve est calculée en appliquant une fonction de hashage conjointement à un nom ou à une chaîne de caractères associé à une fonction tracée et à un hash ou une preuve précédemment calculé(e).

Dans certains modes de mise en oeuvre, à l'étape S60, après un calcul d'une première preuve, calculée par exemple à partir d'un hash du code binaire du programme, ou à partir du premier identifiant de fonction tracée enregistré à l'étape S30, les preuves suivantes sont calculées successivement à partir des identifiants suivants de fonctions tracées enregistrés successivement à l'étape S30, en appliquant la fonction de hashage conjointement à un nom ou une chaîne de caractères associé à la fonction tracée venant d'être exécutée et à la dernière preuve précédemment calculée.

Dans certains modes de mise en oeuvre, pour au moins une fonction tracée dite fonction tracée paramétrée, l'identifiant de la fonction tracée paramétrée inclut une valeur d'au moins un paramètre d'entrée de ladite fonction tracée paramétrée. Ainsi, cette valeur dudit au moins un paramètre d'entrée va entrer dans le calcul de la preuve par le TPM à l'étape S60 et le vérificateur à l'étape S80. Par conséquent, la vérification effectuée à l'étape S90 inclura la vérification de l'égalité des paramètres d'entrée, pour celle ou celles des fonctions tracées qui sont paramétrées.

Dans certains modes de mise en oeuvre, le hash d'un exécutable du programme qui doit être déployé sur le prouveur est à disposition du vérificateur ; avant l'exécution du programme, le prouveur transmet au vérificateur un hash d'un exécutable du programme qui va être exécuté ; et la méthode comprend en outre une étape de vérification S10, dans laquelle le vérificateur vérifie si le hash de l'exécutable qui va être exécuté reçu du prouveur est égal au hash de l'exécutable qui doit être déployé sur le prouveur.

Par extension, la méthode de contrôle d'exécution de programmes selon la présente divulgation peut être étendue au contrôle d'un ensemble de programmes, notamment de programmes relativement peu fiables.

Ainsi, un deuxième objet de la présente divulgation concerne une méthode de contrôle d'une pluralité de programmes dans laquelle :
A. on contrôle chacun des programmes de ladite pluralité de programmes en mettant en oeuvre une méthode de contrôle telle que présentée précédemment ; et
B. on déclenche une action de contrôle globale en fonction des actions de contrôle déclenchées respectivement pour chacun des programmes de ladite pluralité de programmes.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
[Fig. 1] est un diagramme-bloc représentant schématiquement la mise en oeuvre d'une méthode selon la présente divulgation dans un système de contrôle d'exécution d'un programme ;
[Fig. 2] est un logigramme présentant un exemple de mise en oeuvre de méthodes selon la présente divulgation ;
[Fig. 3] est une représentation schématique d'un premier graphe d'exécution d'un programme ;
[Fig. 4] est une représentation schématique des différents identifiants, sous forme de hashs, calculés lors de la mise en oeuvre d'une méthode selon la présente divulgation ; et
[Fig. 5] est une représentation schématique d'un deuxième graphe d'exécution d'un programme.

### DESCRIPTION DÉTAILLÉE DE L'INVENTION

Des modes particuliers de mise en oeuvre de méthodes selon la présente divulgation vont maintenant être présentés à titre d'exemples de réalisation non limitatifs.

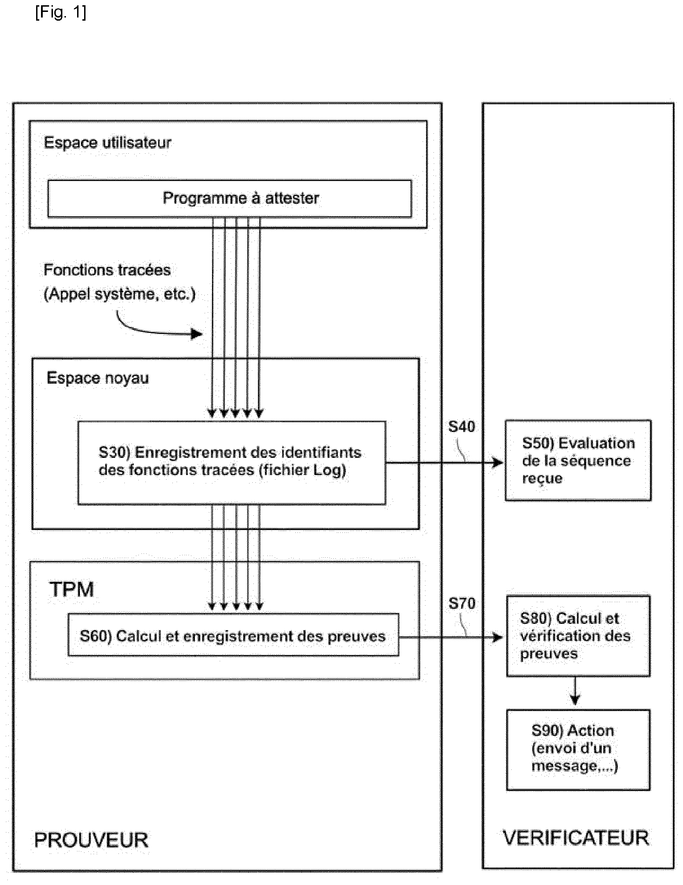

Sur la figure 1 sont représentés schématiquement les composants d'un système de contrôle d'exécution d'un programme, à savoir :
- un premier ordinateur, ou prouveur, sur lequel un programme dont on cherche à contrôler la bonne exécution doit être exécuté ; et
- un deuxième ordinateur, ou vérificateur, généralement distant du premier, qui est utilisé pour vérifier l'exécution conforme du programme en mettant en oeuvre la méthode d'attestation selon la présente divulgation.

De manière connue en soi, l'espace mémoire du prouveur est divisé en un espace utilisateur et un espace noyau. L'espace utilisateur est à la portion de mémoire virtuelle du système où s'exécutent les programmes de l'utilisateur (les applications). L'espace noyau est la portion de mémoire réservée au noyau du système d'exploitation - c'est-à-dire au code qui contrôle l'accès direct au matériel, gère la mémoire et les processus, et plus généralement, qui assure les fonctions basiques du système d'exploitation.

Le programme dont l'exécution doit être contrôlée est donc enregistré dans l'espace utilisateur.

Lors de son exécution, ce programme effectue un certain nombre de fonctions. Dans la méthode suivant la présente divulgation, une partie de ces fonctions sont des fonctions tracées. Par exemple, dans l'exemple présenté ici, les appels systèmes sont des fonctions tracées. Un appel système, ou "syscall", est une requête faite par un programme en espace utilisateur au système d'exploitation (OS, 'Operating System') pour effectuer une action spécifique que seul le noyau du système d'exploitation peut exécuter.

Lors de l'exécution du programme, à chaque fois qu'une fonction tracée est effectuée, un identifiant associé à la fonction tracée exécutée est enregistré.

Les fonctions tracées dépendent du mode de mise en oeuvre mais incluent généralement les appels système, les opérations de lecture/écriture dans la mémoire, et/ou l'exécution de code stocké dans une ou des zone(s) prédéterminée(s) de la mémoire.

Le prouveur comporte un module TPM afin d'y enregistrer certaines informations.

Le cadre général de mise en oeuvre de la méthode selon la présente divulgation est présenté de manière schématique sur la Fig.1.

La méthode selon la présente divulgation va être présentée dans le cas d'un programme très simple, à titre d'exemple, dont le code est retranscrit ci-dessous dans la Table 1. Ce programme affiche le texte « Hello World ! » dans la console du prouveur.

Dans cet exemple, les appels systèmes sont pris en tant qu'exemples de fonctions tracées, mais toute autre fonction susceptible d'être tracée dans le cadre du procédé selon la présente divulgation aurait pu être utilisée tout en restant dans le cadre de la présente divulgation.

**Table 1: Programme Pr**

| |
|---|
| ```
                                     -----------------
        int puts(const char *s);
        int main(int argc, char *argv[]) {
             puts("hello world");
             return 0;
        }
``` |

La mise en oeuvre d'une méthode selon la présente divulgation pour attester de la bonne exécution de ce programme va maintenant être présentée.

Lors d'une étape préalable S0, à partir du code source de ce programme, le vérificateur détermine le faisceau de référence de ce programme, faisceau qui sera utilisé ensuite pour vérifier la bonne exécution du programme.

Ce faisceau de référence peut être déterminé par toute méthode appropriée : par exemple à l'aide d'un outil d'analyse du code source, ou bien en observant une exécution du programme (e.g. avec strace (marque déposée)), etc.

Dans l'exemple présenté, l'exécution du programme conduit à générer successivement trois appels systèmes : « execve » (déclenchement de l'exécution du programme), « write » (écriture dans un descripteur de fichier) et « exit « (fin de l'exécution du programme), qui sont trois fonctions tracées.

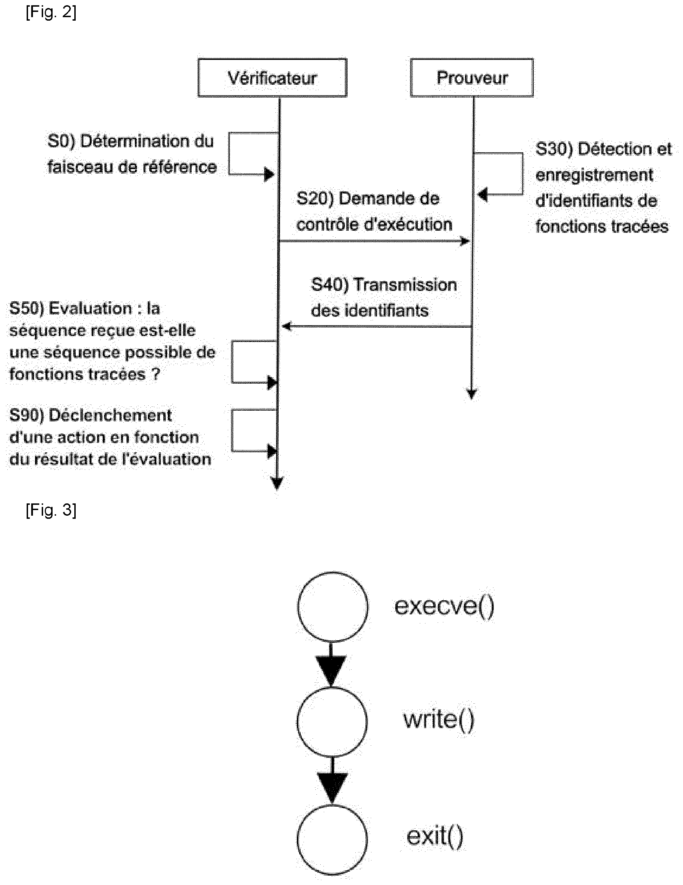

Par conséquent, le programme a pour graphe d'appels le graphe de la Fig.3. Ce graphe comporte trois noeuds execve, write et exit, reliés par deux liaisons orientées, à savoir de execve à write et de write à exit.

A partir de ce graphe, on peut déduire toutes les séquences possibles des fonctions tracées du programme qui correspondent à des exécutions conformes du programme. En l'occurrence, on ne peut identifier qu'une seule séquence, constituée successivement par les trois fonctions tracées (chacune étant un appel système) : execve, write, et exit.

Le graphe de la Fig.3 constitue donc un faisceau de référence au sens de la présente divulgation.

Dans le cas général, à partir du faisceau de référence, on peut déterminer un nombre, parfois élevé, de séquences possibles de fonctions tracées exécutées par le programme considéré lors d'une exécution conforme de celui-ci.

On notera que dans le cas où le code source du programme à observer n'est pas disponible, il peut quand même être possible de générer le faisceau de référence. On peut par exemple exécuter le programme sur un système de confiance, et enregistrer les différentes fonctions tracées effectuées par le programme.

Par ailleurs à l'étape S0, dans l'exemple présenté le hash H_{binaire à installer} de l'exécutable du programme (le code exécutable) qui doit être déployé sur le prouveur est calculé et enregistré dans le vérificateur. Dans certains cas, il est de plus transmis au prouveur, pour permettre une vérification complémentaire à l'étape S10 décrite plus loin.

Après l'étape S0, étape préliminaire qui se déroule éventuellement longtemps avant toute exécution du programme, l'exécution du programme à évaluer, l'évaluation de son exécution, et le lancement d'une action suite à cette évaluation, se déroulent alors de la manière suivante.

### Etape S10 (optionnelle) - Vérification du hash de l'exécutable du programme

L'étape S10 est une étape optionnelle qui peut être effectuée si le programme à exécuter n'a pas encore été installé sur le prouveur.

On se place dans le cas où néanmoins le programme a déjà été transmis au prouveur, sous forme d'un exécutable.

Avant l'installation de cet exécutable, on procède alors à la vérification préalable suivante.

Le prouveur calcule tout d'abord le hash H_{binaire_installation} de cet exécutable.

Si le prouveur a reçu le hash H_{binaire à installer} de l'exécutable du programme, le prouveur vérifie alors que le hash H_{binaire_installation} est égal au hash H_{binaire à installer} du code qu'il a été prévu de déployer sur le prouveur.

S'il y a une différence entre les deux hashs, l'installation du programme n'est pas exécutée. Dans le cas contraire, le programme est installé.

Dans d'autres modes de mise en oeuvre, le hash calculé par le prouveur, H_{binaire_installation}, est transmis au vérificateur.

C'est alors le vérificateur qui vérifie (ou vérifiera) que le hash H_{binaire_installation} est égal au hash H_{binaire à installer} du code qu'il a été prévu de déployer sur le prouveur et qui, s'il y a une différence entre les deux hashs, déclenchera une action corrective à l'étape S90 décrite plus loin.

Le programme est ensuite exécuté. Les étapes S20 à S90 sont alors réalisées.

### Etape S20 (optionnelle) - Demande de vérification par le vérificateur

Dans certains modes de mise en oeuvre de la méthode de contrôle d'exécution selon la présente divulgation, la vérification de l'exécution conforme du programme n'est pas systématique, et au contraire est évaluée de manière conditionnelle.

Dans certains cas, pour toute exécution du programme, l'étape S30 est réalisée.

Dans ce cas, à l'étape S20, si pour une exécution donnée du programme, le vérificateur souhaite effectuer une vérification d'exécution du programme, il transmet au prouveur une demande de vérification. Cette demande de vérification (étape S20) peut alors avoir lieu avant, pendant ou après l'exécution du programme ; elle déclenche l'exécution des étapes S40 à S90 du programme.

Dans d'autres modes de mise en oeuvre, l'étape d'enregistrement S30 n'est réalisée que si la demande de vérification (étape S20) a été réalisée avant l'exécution du programme, c'est-à-dire seulement si la demande de vérification d'exécution du programme par le vérificateur a été préalablement envoyée au prouveur.

Pendant l'exécution du programme, le prouveur exécute l'application d'enregistrement enregistrée dans son espace noyau. Cette application est configurée pour tracer (c'est-à-dire pour détecter) l'exécution des fonctions tracées, et enregistrer l'identifiant de chacune des fonctions tracées dont l'exécution a été détectée.

On suppose que pendant l'exécution du programme, un certain nombre de fonctions tracées F_i, i=1... N sont exécutées successivement (Une fonction tracée peut naturellement être exécutée éventuellement plusieurs fois).

### Etape S30 - Enregistrement de l'identifiant Id i de la fonctions tracée Fi

A l'étape S30 (qui dure pendant toute la durée d'exécution du programme), grâce à l'application d'enregistrement, le prouveur détecte toute exécution d'une fonction tracée. Chaque fois que l'exécution d'une fonction tracée F_i est détectée, le prouveur enregistre dans le TPM l'identifiant Id_i de la fonction tracée détectée. Cet identifiant est une donnée qui permet d'identifier la fonction tracée.

L'enregistrement de l'identifiant de fonction tracée peut avoir lieu immédiatement après l'exécution de la fonction, ou être différé.

L'identifiant Id_i de la fonction tracée F_i est enregistré dans un fichier dit 'fichier de log'.

De manière importante, l'enregistrement dans le fichier de log des identifiants de fonctions tracées est réalisé de manière à conserver l'information indiquant l'ordre dans lequel les fonctions tracées ont été réalisées. Ainsi, la séquence des identifiants de fonctions tracées enregistrés, ou séquence enregistrée, est représentative de l'ordre suivant lequel ces fonctions ont été exécutées.

L'identifiant Id_i de fonction tracée peut prendre de très nombreuses formes.

Un tel identifiant peut être, ou du moins peut inclure par exemple le nom (c'est-à-dire un identifiant quelconque) de la fonction tracée à laquelle il est associé. Inversement, toute donnée à partir de laquelle on peut obtenir le nom ou un identifiant quelconque d'une fonction tracée peut être utilisée comme identifiant de la fonction tracée en question.

Un tel identifiant peut être une donnée en clair, ou chiffrée, par exemple sous forme d'un hash comme par exemple un hash du nom de la fonction tracée associée.

Dans ce dernier cas, une personne (qui doit disposer nécessairement de la fonction de hashage) peut constater que l'identifiant de la fonction tracée est égal au hash d'une fonction tracée spécifique et ainsi identifier cette dernière fonction.

En fonction de l'importance que l'on attribue à l'exécution conforme du programme, la méthode selon la présente divulgation peut être mise en oeuvre de différentes manières, en faisant varier la fréquence des vérifications.

Notamment, les étapes S40 à S90 de la méthode peuvent être exécutées soit en continu, soit périodiquement, soit seulement une fois lorsque l'exécution du programme est terminée.

Lorsque ces étapes sont exécutées en continu, elles sont exécutées chaque fois qu'une fonction tracée F_i est exécutée.

Lorsque ces étapes sont exécutées périodiquement, cela signifie généralement que ces étapes sont exécutées lorsque plusieurs fonctions tracées ont été exécutées. Ces étapes peuvent alors être déclenchées soit à intervalles (temporels) réguliers, soit lorsqu'un certain nombre de fonctions tracées ont été exécutées, soit lorsque certaines fonctions tracées spécifiques, prédéterminées, sont exécutées, etc.

Par conséquent à l'étape S40, la transmission des identifiants de fonctions tracées peut se faire en un seul envoi, en envois groupés, ou 'en continu'. Dans ce dernier cas, un identifiant est transmis à chaque fois que l'exécution d'une fonction tracée est détectée.

Pour simplifier dans ce document, il est mentionné essentiellement l'envoi « d'identifiants de fonctions tracées » (au pluriel). Cependant il doit être compris qu'un envoi d'identifiants de fonctions tracées peut ne concerner qu'un identifiant unique.

On se place maintenant, à titre d'exemple, dans le cas d'une exécution 'en continu'.

### Etape S40 - Transmission au vérificateur de l'identifiant de la fonction tracée

A l'étape S40, le prouveur transmet au vérificateur l'identifiant Id_i de la fonction tracée qui a été détectée.

Dans certains modes de mise en oeuvre, pour garantir l'authenticité des identifiants transmis, l'identifiant (ou les identifiants) envoyé par le TPM est ou sont signé(s) par une ou des clés privées enregistrées dans le TPM.

### Etape S50 - Evaluation de conformité de la séquence reçue de fonctions tracées

A l'étape S40, le vérificateur a reçu les identifiants Id_i de toute la séquence des fonctions tracées qui ont été détectées depuis le début de l'exécution du programme.

Selon le mode de mise en oeuvre, il sélectionne alors tout ou partie de cette séquence de fonctions tracées (en appliquant une règle de sélection), et constitue ainsi une séquence sur laquelle va porter l'évaluation, séquence qui est appelée séquence reçue. La séquence reçue peut être constituée par exemple par la liste de toutes les fonctions tracées exécutées dont l'identifiant a été reçue, ou seulement les N dernières de ces fonctions, ou toute autre liste adaptée.

Dans l'exemple présenté, l'identifiant de la fonction tracée détectée est transmis signé au vérificateur. Le vérificateur commence donc par vérifier que la signature associée à l'identifiant est bien valide : il en déduit que l'identificant reçu n'a pas été modifié et provient bien du TPM.

Le vérificateur évalue alors si la séquence reçue correspond effectivement à une séquence possible de fonctions tracées pouvant être déduite du faisceau de référence. En d'autres termes, il vérifie si les identifiants Id_i reçus du prouveur et correspondant à la séquence reçue peuvent être associés, dans le même ordre, à une séquence de fonctions tracées successivement exécutées pendant une exécution conforme du programme.

Si le vérificateur n'identifie aucune séquence de fonctions tracées issue du faisceau de référence et qui correspond à la séquence reçue, il déclenche un message d'erreur pour signaler une exécution non conforme du programme.

Dans le cas contraire, il passe aux étapes de vérification supplémentaire (optionnelles) S60-S80.

### Etape S60 - Calcul et enregistrement de preuve de séquence par le TPM

Le but de la vérification supplémentaire optionnelle des étapes S60-S80 est d'assurer que la séquence reçue de fonctions tracées qui a été prise en compte à l'étape de vérification S50 est bien la séquence de fonctions tracées qui ont effectivement été exécutées. Cette vérification supplémentaire est effectuée grâce au TPM.

Dans un premier temps, au cours de l'étape S60, le TPM détermine parmi les identifiants enregistrés à l'étape S30 ceux qui correspondent à la séquence reçue, en appliquant la même règle de sélection qu'à l'étape S50.

A partir de ces identifiants, le TPM calcule alors une preuve de séquence enregistrée Pr_{enreg}. Cette preuve va servir à vérifier que la séquence reçue à partir de laquelle le vérificateur a effectué son évaluation à l'étape S50 est bien identique à la séquence enregistrée correspondante qui contient les fonctions tracées qui ont été exécutées par le prouveur et enregistrées par le TPM. Grâce à l'utilisation de la même règle de sélection, la séquence de fonctions tracées qui sert de base au calcul de la preuve de séquence enregistrée Pr_{enreg} par le TPM correspond à celle qui sert de base au calcul de la preuve de séquence reçue Pr_{rec} par le vérificateur (ce calcul sera présenté plus loin).

Ainsi selon le mode de mise en oeuvre, la preuve calculée (Pr_{enreg} ou Pr_{rec}) peut prendre en compte une séquence de fonctions tracées exécutées plus ou moins longue. Cette preuve peut prendre en compte seulement les deux dernières fonctions tracées enregistrées. La vérification des preuves successives permet de valider l'ensemble de la séquence constatée de fonctions exécutées par le programme.

Dans certains modes de mise en oeuvre, la preuve est fonction de l'ensemble des fonctions tracées exécutées depuis le lancement du programme.

Tout type de fonction de calcul de preuve peut être utilisé pour réaliser l'étape S60. La fonction de calcul de preuve doit seulement avoir la propriété que les preuves calculées par cette fonction pour deux séquences de fonctions tracées différentes, soient différentes.

### Etape S70 - Transmission au vérificateur de la preuve de séquence Pr_{TPM}

A l'étape S70, le TPM transmet au vérificateur la preuve de séquence enregistrée Pr_{enreg} calculée à l'étape S60.

En général, chaque fois qu'une nouvelle fonction tracée a été identifiée et qu'une preuve de séquence enregistrée Pr_{enreg} a été calculée, cette preuve Pr_{enreg} est transmise sans délai au vérificateur.

Cependant, les preuves peuvent être transmises seulement en fin d'exécution, ou encore par paquets ; tout rythme de transmission est envisageable.

### Etape S80 - Vérification de la séquence par le vérificateur

A l'étape S80, le vérificateur calcule la preuve Pr_{rec} de la séquence reçue. Il effectue donc le même calcul que celui effectué par le TPM à l'étape S60, mais se fondant en entrée sur les identifiants reçus ld_i, qui pourraient éventuellement différer des identifiants enregistrés par le TPM.

Le vérificateur effectue alors la vérification suivante pour vérifier que la séquence d'opérations prise en compte pour confirmer l'exécution conforme du programme à l'étape S50 est bien la séquence d'opérations tracées qui a été réellement effectuée par le prouveur : il vérifie que la preuve de séquence enregistrée Pr_{enreg} calculée par le TPM est bien égale à la preuve Pr_{rec} qu'il a calculée. Si ces preuves ne sont pas égales, cela signifie que la séquence d'identifiants sur laquelle s'est fondé le vérificateur à l'étape S50 pour réaliser la vérification n'est pas correcte. Une action corrective doit donc être lancée.

### Etape S90 - Action finale

A l'étape S90, le vérificateur déclenche une action en fonction d'un résultat de l'évaluation de conformité réalisée à l'étape S50, en prenant en compte le cas échéant la vérification supplémentaire effectuée à l'étape S80.

Notamment, si une différence a été détectée à l'étape S80, le vérificateur conclut que la séquence reçue de fonctions tracées n'est pas celle qui a été effectivement exécutée par le prouveur, et déclenche une action (par exemple, émet un message) pour prendre en compte ce constat.

Inversement, si aucune des étapes S50 et S80 de vérification n'a conduit à détecter une erreur, le vérificateur conclut que le programme s'est déroulé normalement. Eventuellement il envoie un message signalant la bonne exécution du programme jusqu'à l'opération en cours.

### Mise en oeuvre de la méthode de contrôle d'exécution à l'aide d'un graphe

Dans certains modes de mise en oeuvre, le faisceau de référence a une structure de graphe.

Le faisceau de référence a de préférence une structure de graphe dans lequel chaque noeud est associé à une fonction tracée.

Par exemple, pour le programme présenté précédemment, le faisceau de référence a la structure de graphe présentée sur la Fig.3. Les noeuds de ce graphe sont associés respectivement aux fonctions tracées execve, write et exit.

Lors de l'exécution du programme, à la suite de chaque exécution d'une fonction tracée, les étapes S40 à S90 sont exécutées.

A l'étape S30 l'identifiant Id_i de la fonction tracée exécutée F_i est enregistré dans le TPM. A l'étape S40, il est transmis au vérificateur.

A l'étape S50, le vérificateur constitue la séquence reçue ; à l'aide du faisceau de référence, il détermine s'il existe au moins une séquence possible qui correspond à la séquence reçue.

Si au moins une telle séquence possible est identifiée, on suppose que l'exécution de la fonction F_i à l'itération i est conforme ; le résultat de la vérification est positif.

Inversement, si aucune séquence possible n'est identifiée, le vérificateur produit un résultat d'évaluation négatif.

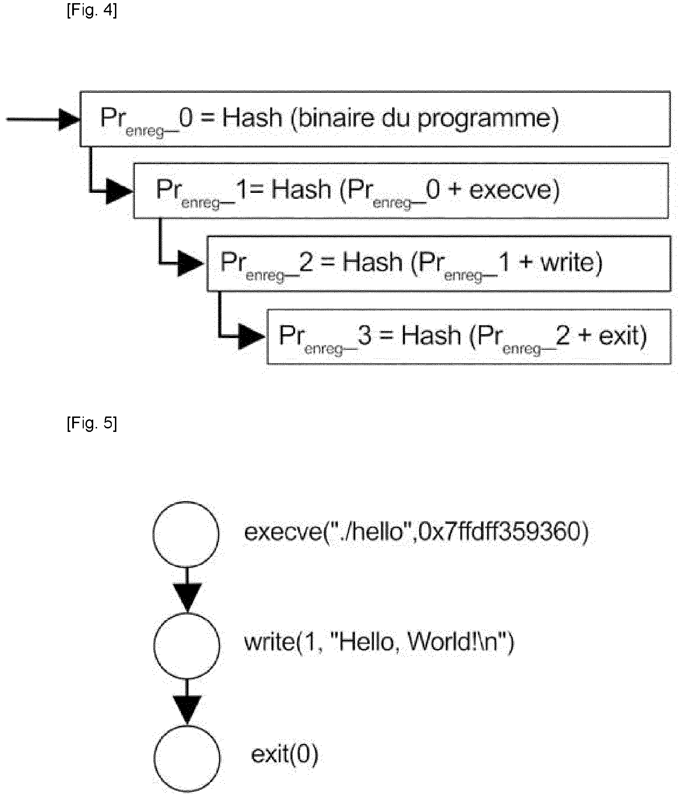

Si le résultat de l'évaluation est positif, la vérification supplémentaire des étapes S60 à S80 est alors réalisée. Un exemple d'un calcul de preuve est illustré par la Fig.4.

Lors de la mise en oeuvre de la méthode, à chaque exécution d'une fonction tracée, deux preuves sont calculées : d'une part, une preuve de séquence enregistrée Pr_{enreg_}i est calculée par le TPM à l'étape S60, en fonction de la séquence enregistrée (c'est-à-dire en fonction, directement ou indirectement, de tous les identifiants des fonctions tracées de la séquence enregistrée) ; et d'autre part, une preuve de séquence reçue Pr_{rec_}i est calculée par le vérificateur à l'étape S80 en fonction de la séquence reçue.

Les preuves calculées Pr_{enreg_}i et Pr_{rec_}i sont alors comparées : cela permet de vérifier que la séquence reçue de fonctions tracées prise en compte par le vérificateur à l'étape S50 est bien identique à la séquence enregistrée de fonctions tracées. Cette dernière séquence, la séquence enregistrée, est fondée sur les enregistrements par le TPM et donc est supposée représenter exactement les fonctions tracées qui ont été effectivement exécutées lors de l'exécution du programme.

Les preuves Pr_{enreg_}i et Pr_{rec_}i peuvent être calculées de la manière suivante.

Lors de l'exécution de la première fonction tracée qui est exécutée, des preuves initiales Pr_{enreg}0 (ou resp Pr_{rec}0) sont calculées. Elles peuvent être calculées par exemple sur la base du code binaire du programme P installé, ou par exemple du hash H_{binaire_installé} du code binaire du programme installé, ou autre.

Ensuite, suite à chaque détection de l'exécution d'une fonction tracée F_i, à l'étape S50 le TPM calcule une nouvelle preuve de séquence enregistrée Pr_{enreg}i et à l'étape S70 le vérificateur calcule une nouvelle preuve de séquence reçue Pr_{rec_}i.

Chacune de ces preuves (Pr_{enreg_}i, Pr_{rec_}i) est fonction à la fois de la dernière preuve calculée (Pr_{enreg_}i-1, Pr_{rec_}i-1) (la preuve calculée suite à la dernière détection de l'exécution d'une fonction tracée, F_i-1 et de l'identifiant de la fonction tracée F_i.

Ainsi, par la prise en compte successivement de l'ensemble des fonctions tracées exécutées, l'algorithme prend en compte l'ensemble des identifiants des fonctions tracées qui ont été détectées, pour construire les preuves, respectivement Pr_{enreg_}i et Pr_{rec_}i, de proche en proche.

De nombreuses fonctions de calcul de preuve sont envisageables. Par exemple, pour chaque détection d'exécution d'une fonction tracée F_i, le TPM ou respectivement le vérificateur concatène la preuve, Pr_{enreg}i-1 ou respectivement Pr_{rec_}i-1 calculée lors de l'itération précédente avec l'identifiant Id_i associé à l'itération i en cours. Le TPM (ou respectivement le vérificateur) calcule alors le hash de cette concaténation pour obtenir la nouvelle preuve Pr_{enreg_}i,resp. Pr_{rec_}i. Ainsi suite à la détection de l'exécution de la fonction F_i, le TPM et le vérificateur obtiennent respectivement :
Pr_{enreg_}i = hash (Concatener(Pr_{enreg_}i-1,Id _i)) et Pr_{rec_}i = hash (Concatener(Pr_{rec}i-1,ld_i» où Concatener est la fonction de concaténation.

Dans l'exemple présenté ici, les identifiants (ld_i) sont les chaînes de caractères 'execve', 'write' et 'exit' pour des valeurs i = 1, 2 et 3 respectivement.

Les valeurs preuves successives se calculent donc par l'algorithme indiqué ci-dessus de la manière suivante (dans le cas, par exemple, du TPM) :
i=1. Pour le premier identifiant Id_1 : Pr_{enreg}1 = hash(Concatener(H_{binaire_installé}, 'Execve')) car Id_{Log}1 = 'Execve'.
i=2. Pr_{enreg}2 = hash (Concatener(Pr_{enreg}1,'Write')) car Id_2= 'Write'.
i=3. Pr_{enreg3} = hash (Concatener(Pr_{enreg2},'Exit')) car Id_3= 'Exit'.

A l'étape S80, le vérificateur vérifie que la preuve Pr_{rec_}i qu'il calculée correspond bien à la preuve Pr_{enreg_}i calculée par le TPM.

La procédure présentée ci-dessus conduit à réaliser successivement les opérations d'enregistrement, de concaténation et de hashage qui sont montrées par la Fig.4.

Avantageusement, cette procédure permet de confirmer la séquence des fonctions tracées exécutées lors de l'exécution du programme.

### Vérification avec prise en compte des paramètres des fonctions tracées

Une variante de mise en oeuvre de l'étape d'évaluation S50 et/ou des étapes de vérification S60-S80 est illustrée par la Fig.5.

Ces variantes permettent un contrôle plus approfondi de l'exécution conforme du programme car, au moins pour une partie des fonctions tracées, en plus des identifiants de ces fonctions, une ou plusieurs valeurs de paramètre(s) de ces fonctions sont pris en compte dans le contrôle effectué.

Dans ce mode de mise en oeuvre, le faisceau de référence est configuré de telle sorte que, lorsqu'on l'utilise pour déterminer si une séquence de fonctions tracées est une séquence possible de fonctions tracées, et si cette séquence comprend au moins une fonction tracée elle-même fonction d'un ou plusieurs paramètres, il est possible de déterminer également si une valeur dudit un ou plusieurs paramètres est une valeur normale pour ce ou ces paramètres lors de l'exécution de la fonction considérée pendant l'exécution de la séquence possible de fonctions tracées considérée.

Dans ce mode de mise en oeuvre, lors de l'exécution du programme, à l'étape S30, pour chaque fonction tracée fonction d'un ou plusieurs paramètres, les identifiants de fonction qui sont enregistrés contiennent non seulement le nom de la fonction, mais contiennent aussi la ou les valeur(s) du ou des paramètres d'entrée de la fonction lorsque la fonction tracée en question a été exécutée.

Dans le mode de mise en oeuvre présenté ici, lors de l'étape d'enregistrement S30, pour chaque fonction tracée exécutée, l'identifiant enregistré pour la fonction contient à la fois le nom de la fonction tracée, et les valeurs des paramètres d'entrée de la fonction lorsqu'elle a été exécutée.

Lors de l'étape d'évaluation S50, le vérificateur évalue si une séquence de fonctions tracées reçue, associée aux identifiants de fonction tracée reçus, correspond à une séquence possible de fonctions tracées pouvant être déduites du faisceau de référence.

Pour réaliser cette évaluation, dans certains modes de mise en oeuvre, le vérificateur évalue s'il existe une séquence possible telle que à chaque identifiant de fonction tracée de la séquence reçue correspond un identifiant de fonction tracée de la séquence possible. Dans cette évaluation, pour déterminer qu'un identifiant de fonction tracée de la séquence reçue correspond à un identifiant de fonction tracée de la séquence possible, le vérificateur vérifie non seulement que les noms de la fonction tracée, pour les deux identifiants, se correspondent, mais aussi que les valeurs de paramètres enregistrées, pour les deux identifiants, se correspondent également.

Par suite, la vérification de l'exécution du programme à l'étape S50 inclut la vérification, pour chacune des fonctions tracées dont les paramètres sont pris en compte, que la ou les valeur(s) de ce(s) paramètre(s) pendant l'exécution de la fonction tracée en question correspondent bien à la ou aux valeurs de ces mêmes paramètres dans une séquence d'exécution possible déduite du faisceau de référence.

Comme alternative, ou en plus, la vérification des valeurs des paramètres d'entrée des fonctions tracées exécutées peut être faite lors des étapes de vérification S60-S80.

Dans ce cas, il suffit d'utiliser une fonction de calcul de preuve qui prend en compte, dans les identifiants des fonctions tracées exécutées, non seulement le nom (ou la chaîne de caractères) identifiant la fonction, mais de plus la ou les valeurs des paramètres d'entrée des fonctions tracées exécutées.

Ainsi, la vérification de deux preuves Pr_{enreg_}i et Pr_{rec_}i à l'étape S80 ne pourra donner un résultat positif que si non seulement les noms des fonctions tracées exécutées se correspondent, mais de plus les valeurs de paramètres d'entrée, pour les exécutions considérées des fonctions tracées exécutées, se correspondent également (sont égales).

Un exemple concret va maintenant être développé.

Dans cet exemple, le premier appel système effectué par le programme P est la fonction tracée 'execve'. Cette fonction prend en entrée deux paramètres, à savoir le nom et l'adresse mémoire du répertoire où le code de la fonction execve est enregistré.

Dans le faisceau de référence, c'est-à-dire le graphe représenté sur la Fig.5, on enregistre non seulement pour chaque noeud le nom de la fonction tracée, mais aussi les valeurs de paramètres associées.

Ainsi par exemple le premier noeud, associé à la fonction `execve', qui joue le rôle de l'identifiant, inclut le nom de la fonction `execve', mais aussi les valeurs que doivent prendre les deux paramètres, respectivement « ./hello » et « 0x7ffdff359360 », lors d'une exécution conforme du programme.

Lors de la mise en oeuvre de l'algorithme présenté précédemment pour déterminer si la séquence constatée de fonctions tracées est une séquence normale de fonctions traitées, il est tenu compte de ces paramètres, notamment lors des étapes S60-S80.

Ainsi à l'étape S80, pour calculer la preuve Pr_{enreg}_1 pour la première fonction tracée exécutée, la fonction 'execve', le vérificateur concatène la valeur d'initialisation H_{binaire installé}, le nom de la fonction tracée 'execve', et les valeurs de paramètres : `./hello' et '0x7ffdff359360' : Pr_{enreg1} = hash( Concatener(H_{binaire_installé}, 'Execve', ./hello', '0x7ffdff359360')

Le vérificateur calcule alors les deux preuves suivantes : Pr_{enreg}2 = hash (Concaténer(Pr_{enreg}1,'Write','hello, World !\n')) et Pr_{enreg}3 = hash (Concaténer(Pr_{enreg2},'Exit','0')).

Chacune des preuves calculées est donc fonction non seulement des noms des fonctions tracées exécutées, mais de leurs paramètres d'entrée.

Grâce à cela la vérification effectuée aux étapes S60-S80 permet de vérifier non seulement l'exécution dans l'ordre souhaité de ces fonctions, mais de plus le fait que les valeurs des paramètres d'entrée de ces fonctions avaient des valeurs conformes aux attentes.

## Revendications

1. Méthode de contrôle d'exécution d'un programme exécuté par un premier ordinateur, dit prouveur, au moyen d'un deuxième ordinateur, dit vérificateur ;
le programme étant enregistré en espace utilisateur du prouveur ;
une fonction tracée (F_i) étant une fonction exécutable par le prouveur parmi un ensemble prédéterminé de fonctions du prouveur, et impliquant une communication d'informations entre l'espace utilisateur et l'espace noyau ;
un faisceau de référence étant une structure de données à disposition du vérificateur à partir de laquelle il est possible de déterminer si une séquence de fonctions tracées est une séquence possible de fonction tracées, c'est-à-dire une séquence de fonctions tracées susceptibles d'être exécutées, notamment de manière consécutive, lors d'une exécution conforme du programme ;
dans laquelle les opérations suivantes sont réalisées :
S30) lors d'une exécution du programme, en exécutant une application d'enregistrement enregistrée en espace noyau, pour chaque fonction tracée (F_i) exécutée lors de l'exécution du programme, le prouveur détecte l'exécution de la fonction tracée (F_i) et enregistre un identifiant (Id_i) de la fonction tracée ;
S40) le prouveur transmet au vérificateur les identifiants (ld_i) des fonctions tracées qui ont été exécutées, dans le même ordre que l'ordre d'exécution des fonctions tracées correspondantes ;
S50) à l'aide du faisceau de référence, le vérificateur évalue si une séquence de fonctions tracées associée à des identifiants de fonction tracée qu'il a reçus, dite séquence reçue, constitue une séquence possible de fonctions tracées ; et
S90) le vérificateur déclenche une action en fonction au moins d'un résultat de l'évaluation réalisée à l'étape S50.

2. Méthode de contrôle d'exécution selon la revendication 1, dans laquelle
le faisceau de référence a une structure de graphe, dans lequel chaque noeud est associé à une fonction tracée ; et
à l'étape S50, le vérificateur évalue si la séquence reçue constitue une séquence possible de fonctions tracées en vérifiant que ladite séquence reçue correspond à un chemin possible de parcours du faisceau de référence.

3. Méthode de contrôle d'exécution selon la revendication 1 ou 2, dans laquelle
pour au moins une fonction tracée dite fonction tracée paramétrée, l'identifiant de la fonction tracée paramétrée inclut en outre une valeur d'au moins un paramètre d'entrée de ladite fonction tracée paramétrée ; et
lors de l'étape d'évaluation S50, lorsque le vérificateur évalue si la séquence reçue constitue une séquence possible de fonctions tracées, si au moins un identifiant reçu à l'étape S40 est l'identifiant d'une fonction tracée paramétrée, le vérificateur détermine si la valeur dudit au moins un paramètre d'entrée incluse dans l'identifiant enregistré à l'étape S30 pour l'exécution considérée de la fonction tracée paramétrée correspond à la valeur dudit au moins un paramètre d'entrée pour l'exécution correspondante de la fonction tracée paramétrée dans la séquence possible de fonctions tracées.

4. Méthode de contrôle d'exécution selon l'une quelconque des revendications 1 à 3, dans laquelle ledit ensemble prédéterminé de fonctions du prouveur comprend ou est constitué de fonctions choisies parmi des fonctions d'appel système, des opérations de lecture/écriture dans une mémoire du prouveur, et des fonctions d'exécution d'un code enregistré dans une zone prédéterminée d'une mémoire du prouveur.

5. Méthode de contrôle d'exécution selon l'une quelconque des revendications 1 à 4, dans laquelle le prouveur comporte un module de plateforme de confiance, ou module TPM ; lors de l'étape S30, les identifiants de fonctions tracées sont enregistrés par le prouveur dans le module TPM ;
la méthode comporte en outre les étapes S60, S70 et S80 suivantes :
S60) le module TPM, à partir d'une séquence d'identifiants enregistrés à l'étape S30, dite séquence enregistrée, calcule une preuve de séquence, dite preuve de séquence enregistrée (Pr_{enreg}), de ladite séquence enregistrée ;
une preuve de séquence étant une donnée obtenue par une fonction de calcul de preuve à partir d'une séquence d'identifiants, la fonction de calcul de preuve étant telle que des séquences d'identifiants différentes ont des preuves différentes ;
S70) le TPM transmet la preuve de séquence enregistrée au vérificateur ;
S80) le vérificateur calcule une preuve de séquence reçue (Pr_{rec_}i) à l'aide de la fonction de calcul de preuve, à partir de la séquence reçue, et vérifie si la preuve de séquence reçue (Pr_{rec_}i) est égale ou non à la preuve de séquence enregistrée (Pr_{enreg_}i).

6. Méthode de contrôle d'exécution selon la revendication 5, dans laquelle à l'étape S60, la preuve (Pr_{enreg}) est calculée en appliquant une fonction de hashage à un nom ou à une chaîne de caractères associé(e) à une fonction tracée.

7. Méthode de contrôle d'exécution selon la revendication 6, dans laquelle à l'étape S60, la preuve (Pr_{enreg}) est calculée en appliquant une fonction de hashage conjointement à un nom ou à une chaîne de caractères associé à une fonction tracée et à un hash ou une preuve précédemment calculé(e).

8. Méthode de contrôle d'exécution selon la revendication 7, dans laquelle à l'étape S60, après un calcul d'une première preuve, calculée par exemple à partir d'un hash d'un code binaire du programme, ou à partir du premier identifiant de fonction tracée enregistré à l'étape S30, les preuves suivantes sont calculées successivement à partir des identifiants suivants de fonctions tracées enregistrés successivement à l'étape S30, en appliquant la fonction de hashage conjointement à un nom ou une chaîne de caractères associé à la fonction tracée venant d'être exécutée et à la dernière preuve précédemment calculée.

9. Méthode de contrôle d'exécution selon l'une quelconque des revendications 5 à 8, dans laquelle pour au moins une fonction tracée dite fonction tracée paramétrée, l'identifiant de la fonction tracée paramétrée inclut une valeur d'au moins un paramètre d'entrée de ladite fonction tracée paramétrée.

10. Méthode de contrôle d'exécution selon l'une quelconque des revendications 1 à 9, dans laquelle
le hash d'un exécutable du programme qui doit être déployé sur le prouveur est à disposition du vérificateur,
avant l'exécution du programme, le prouveur transmet au vérificateur un hash d'un exécutable du programme qui va être exécuté ; et
la méthode comprend en outre une étape de vérification S10, dans laquelle le vérificateur vérifie si le hash de l'exécutable qui va être exécuté reçu du prouveur est égal au hash de l'exécutable qui doit être déployé sur le prouveur.
